# EUROPÄISCHE PATENTANMELDUNG

(11) **EP 1 914 510 A1**
(43) Veröffentlichungstag der Anmeldung: **23.04.2008**
(21) Anmeldenummer: 07020182.7
(22) Anmeldetag: 16.10.2007
(51) Int. Cl.: G01B 11/06

(54) **Messverfahren zur Bestimmung des Verlaufs einer Kante eines Profils und Richtanlage für Metallprofile und Richtverfahren für Metallprofile**

(30) Priorität: 19.10.2006 DE 102006049947
(71) Anmelder: Betriebsforschungsinstitut VDEh Institut für angewandte Forschung GmbH, 40237 Düsseldorf (DE)
(72) Erfinder: Maag, Axel Dr., 42799 Leichlingen (DE); Haverkamp, Werner, 46147 Oberhausen (DE)
(74) Vertreter: Tilmann, Max Wilhelm

(57) **Zusammenfassung**

Die Erfindung betrifft ein Meßverfahren zur Bestimmung des Verlaufs einer Kante eines Profils über die Länge des Profils, bei dem das Profil an einer Meßvorrichtung vorbeibewegt wird, mit der Meßvorrichtung mehrere Momentaufnahmen eines Bereichs gemacht werden, in dem sich die zu beobachtende Kante befindet, mittels Auswertemethoden aus dem Heiligkeitsverlauf über die Momentaufnahme zumindest eine Lagekoordinaten der Kante relativ zu einem festen Koordinatensystem der Momentaufnahme ermittelt wird, und die Lagekoordinate unter Verknüpfung mit einer Information über die jeweilige Momentaufnahme, zu der sie gehört, in einer Datenbank abgelegt wird sowie aus den in der Datenbank abgelegten Lagekoordinaten unter Berücksichtigung der Information über die jeweilige Momentaufnahme, zu der sie gehören, der Verlauf der Kante des Profils ermittelt wird.

## Beschreibung

Die Erfindung betrifft ein Meßverfahren zur Bestimmung des Verlaufs einer Kante eines Profils sowie eine Richtanlage und ein Richtverfahren für Metallprofile und nimmt die Priorität der deutschen Patentanmeldung 10 2006 049 947.6 in Anspruch.

Metallprofile, also metallische Längskörper mit einem bestimmten geometrischen Querschnitt, wie beispielsweise aufgrund ihrer Querschnittsform sogenannte I-Träger, U-Träger, T-Träger, Z-Träger oder L-Träger weisen nach dem dem profilerzeugenden Warmwalzen folgenden Abkühlen Geradheitsabweichungen auf, die beispielsweise bei der Übergabe vom Auslaufrollgang auf das Kühlbett, beim Transport über das Kühlbett oder während der Abkühlung entstehen. Aufgabe der dann nachfolgenden Richtprozesse ist es, die bezüglich der so genannten Y-Y- bzw. X-X-Achse vorliegenden Abweichungen von der Sollform möglichst zu egalisieren, zumindest aber ein Metallprofil zu erzeugen, das den normgerechten Anforderungen bezüglich der maximalen Abweichungen von dem Sollprofil genügt.

In der Praxis werden Richtstrategien eingesetzt, die die Formabweichung des einlaufenden Trägerprofils berücksichtigen. Dabei wird derart vorgegangen, dass die größte örtliche Krümmung im Profil durch die größte Anstellung im Einlaufbereich der Richtmaschine vollständig kompensiert wird. In der Praxis wird die größte örtliche Krümmung aufgrund von Erfahrungswerten angenommen und gegebenenfalls durch Sicherheitszuschläge ergänzt. Die Richtergebnisse sind jedoch häufig unzureichend. Das in der Praxis angewandte Verfahren liefert häufig größere oder kleinere Geradsheitsabweichungen im gerichteten Profil oder führt zu einem sogenannten "Überrichten" des Profils mit der Gefahr von Richtfehlern wie Rissen oder Löchern.

Abweichungen genormter Profile von dem Normzustand werden nach den in den Normen festgelegten Kennzahlen beschrieben. So beschreibt die DIN EN 10 034 beispielsweise sogenannte Gradheitstoleranzen qₓₓ und q_{yy}. Diese Abweichungen werden zum Teil in zeitintensiver Weise manuell ermittelt.

Vor diesem Hintergrund liegt der Erfindung die Aufgabe zugrunde, ein präzises Meßverfahren zur Bestimmung des Verlaufs einer Kante eines Profils über die Länge des Profils vorzuschlagen, insbesondere ein Meßverfahren, das die Ermittlung der genormten Abweichungs-Kennziffern erlaubt, sowie eine Richtanlage und ein Richtverfahren für Profile vorzuschlagen, die ein besseres Richtergebnis herbeiführen können.

Diese Aufgabe wird durch die Gegenstände der nebengeordneten Ansprüche gelöst. Vorteilhafte Ausgestaltungen sind in den Unteransprüchen angegeben.

Die Erfindung geht von dem Grundgedanken aus, das Meßverfahren auf optische Meßvorrichtungen, wie beispielsweise Lichtschnittsensoren oder Temperatur-Linienkameras bzw. auf Distanz-Meßvorrichtungen zu stützen, die Auswertung der damit erzeugten Momentaufnahmen jedoch auf die Beobachtung der Veränderung der Lagekoordinate der Kante zu konzentrieren, um auf diese Weise unter anderem eine Grundlage für die Ermittlung der genormten Abweichungs-Kennziffem für die Profile zu schaffen. Das erfindungsgemäße Meßverfahren sieht u.a. vor, die Informationsfülle der Momentaufnahme auf die Lagekoordinate der Kante zu reduzieren und nur diese Lagekoordinate und die Information über die jeweilige Momentaufnahme, zu der diese Lagekoordinate gehört, der weiteren Auswertung zuzuführen. Damit wird insbesondere die zu bearbeitende Datenmenge reduziert.

Das erfindungsgemäße Meßverfahren sieht vor, daß das Profil an einer Meßvorrichtung vorbeibewegt wird. Besonders bevorzugt erfolgt dies derart, daß das Profil auf einem Rollgang liegend an der Meßvorrichtung vorbeibewegt wird. Es wurde erkannt, daß auf einem Rollgang liegende Profile, soweit sie hinreichend schwer sind, nicht schwingen und auch ihre Ausrichtung relativ zu der Längsachse des Rollgangs nicht verändern. Ein mit seiner Längsachse im Winkel von 10° zur Längsachse des Rollgangs liegendes Profil wird diese schräge Ausrichtung beispielsweise beibehalten und sich demnach nicht in Richtung seiner Längsachse bewegen, sondern entlang der Längsachse des Rollgangs "parallel versetzt" werden.

Diese Erkenntnis nutzt die Erfindung aus, um die Meßwert-Aufnahme zu vereinfachen. Erfindungsgemäß ist es nun nicht mehr notwendig, das zu vermessende Profil in Bezug auf die Meßvorrichtung speziell auszurichten. Vielmehr kann der Kantenverlauf auf einfache Weise ermittelt und gespeichert werden, um dann gemäß einer bevorzugten Ausführungsform so umgerechnet zu werden, als ob das Profil gerade durch die Meßvorrichtung gelaufen wäre. Die erfindungsgemäße Erkenntnis kommt dann besonders gut zum Tragen, wenn das Profil frei auf dem Rollgang liegt, also beispielsweise während der gesamten Messung weder vorne noch hinten festgelegt ist. Es hat sich gezeigt, daß die Festlegung des Meßprofils, beispielsweise wenn das Meßprofil bereits mit einem Ende in eine Richtvorrichtung einläuft oder mit einem Ende noch in der Richtvorrichtung gehalten wird eine Form annimmt, die nicht der des freiliegenden Profils entspricht, sondern einer durch von der Richtvorrichtung in das Profil eingebrachten Kräfte bedingten Form entspricht.

Die Meßvorrichtung nimmt mehrere Momentaufnahmen eines Bereichs auf, indem sich die zu beobachtende Kante befindet. Diese Momentaufnahmen ergeben bei der erfindungsgemäßen Auswertung die Punkte der zu bestimmenden Verlaufskurve der Kante des Profils. Mit zunehmender Zahl der Momentaufnahmen steigt demnach auch die Präzision der ermittelten Verlaufskurve. Besonders bevorzugt werden die Momentaufnahmen mit einer festgelegten Frequenz f aufgenommen, beispielsweise mit einer Frequenz von 66 hz. Die Zahl der Momentaufnahmen bzw. die Frequenz kann fallbedingt eingestellt werden. Die Momentaufnahme erfolgt je nach Art der Meßvorrichtung vorzugsweise über die gesamte Breite des Bereichs, durch den das Profil hindurchtritt, beispielsweise über die gesamte Breite eines Rollgangs. Unter Hinzunahme von Erfahrungswerten kann der von der Momentaufnahme abgedeckte Bereich jedoch auch auf einen kleineren Bereich reduziert werden, nämlich auf den Bereich, in dem sich die zu beobachtende Kante befindet, soweit sich aus Erfahrungswerten ergeben hat, daß die zu beobachtende Kante stets in einem gewissen abgegrenzten Bereich die Meßvorrichtung durchläuft. Auf diese Weise kann das zu analysierende Datenvolumen bei der Auswertemethode beschränkt und damit das Verfahren beschleunigt werden.

Mittels Auswertemethoden wird aus dem Helligkeitsverlauf über die Momentaufnahme die Lagekoordinate der Karten relativ zu einem festen Koordinatensystem der Momentaufnahme ermittelt. Es hat sich gezeigt, daß bei einer Betrachtung des Helligkeitsverlaufs über die Momentaufnahme die Kante des Profils gut als charakteristische Stelle in dem Verlauf ermittelt werden kann. Häufig weist der Verlauf an dieser Stelle eine Unstetigkeit auf oder zumindest eine starke Änderung der Steigung. So eine Charakteristik ermöglicht es, die Lage der Kante in dem Koordinatensystem der Momentaufnahme zu ermitteln. Es hat sich gezeigt, daß diese Auswertemethode sowohl bei der Analyse des Bildes einer normalen Kamera, beispielsweise einer Farbkamera, einer Graustufenbildkamera oder einer Schwarz-Weißkamera, funktioniert. Genauso funktioniert diese Auswertemethode bei der Analyse des Bildes einer Wärmebildkamera, die den Temperaturverlauf mißt. Besonders bevorzugt wird als Koordinatensystem ein orthogonales Koordinatensystem verwendet und dabei insbesondere bevorzugt ein Koordinatensystem zugrundegelegt, das seinen Nullpunkt in einem Eckpunkt des Bildes hat. Alternativ sind jedoch auch andere Vorgehensweisen denkbar. Beispielsweise kann als Koordinatensystem ein Koordinatensystem des Rollgangs verwendet werden und in Kenntnis der relativen Lage der Meßvorrichtung zum Rollgang die bei der Auswertemethode ermittelten Koordinaten auf das Koordinatensystem des Rollgangs umgerechnet werden.

Da die Erfindung im wesentlichen von optischen Meßverfahren ausgeht, wird die Erfindung unter Bezugnahme auf einen Helligkeitsverlauf beschrieben. Der Helligkeitsverlauf wird als Grundform des Signals verstanden, das von den Aufnahmeelement der Meßvorrichtung, beispielsweise den Photodioden, erzeugt wird. Häufig wird dieses Grundsignal jedoch bereits durch die Meßvorrichtung selbst in einen anderen Verlauf umgerechnet, beispielsweise bei einer Wärmebildkamera in einen Temperaturverlauf oder bei einem Lichtschnittsensor in einen Abstandsverlauf. Wenn die Beschreibung der Erfindung davon spricht, daß aus dem Helligkeitsverlauf über die Momentaufnahme eine Lagekoordinate ermittelt wird, so wird darunter auch die Ermittlung der Lagekoordinate aus einem Meßwertverlauf des die Meßvorrichtung verlassenden Signals, beispielsweise eines Temperaturverlauf oder einem Abstandsverlauf, verstanden.

Häufig besteht lediglich ein Interesse daran, die Lage der Kante in einer Richtung (meist senkrecht zur Bewegungsrichtung) zu ermitteln. Das erfindungsgemäße Verfahren sieht deshalb die Ermittlung zumindest einer Lagekoordinate in dem Koordinatensystem vor, auch wenn beide Lagekoordinaten in bevorzugten Ausführungsformen ermittelt werden können. Beispielsweise kann die X-Koordinate in einem orthogonalen Koordinatensystem, in dem die X-Achse in Richtung senkrecht zur Bewegungsrichtung des Profils weist, ermittelt werden. Durch die Art der eingesetzten Meßvorrichtung kann zudem vorgegeben sein, daß nur eine Koordinate ermittelt werden kann, beispielsweise wenn eine Zeilenkamera eingesetzt wird.

Von einem Punkt des erfindungsgemäßen Meßverfahrens an wird die Lagekoordinate unter Verknüpfung mit einer Information über die jeweilige Momentaufnahme, zu der sie gehört, in einer Datenbank abgelegt. Die Information über die jeweilige Momentaufnahme kann ein einfacher Zähler sein, der ausgehend von der ersten Momentaufnahme aufwärts läuft. Die Verknüpfung der ermittelten Lagekoordinaten mit der Information über die jeweilige Momentaufnahme stellt sicher, daß bei der Ausgabe des ermittelten Verlaufs der Kante des Profils die Lagekoordinaten in der richtigen Reihenfolge ausgegeben werden. Abhängig von der Rechnerleistung kann die Bildauswertung schneller erfolgen, als der zeitliche Abstand zwischen zwei Momentaufnahmen, so daß lediglich die Lagekoordinaten und die dazugehörigen Information über die jeweilige Momentaufnahme in einer Datenbank abgelegt werden müssen. Alternativ können in einem Zwischenspeicher alle oder mehrere Momentaufnahmen gespeichert werden und unabhängig vom Fortschreiten der Bewegung des Profils an der Meßvorrichtung vorbei sukzessive ausgewertet werden.

Aus den in der Datenbank abgelegten Lagekoordinaten wird unter Berücksichtigung der Information über die jeweilige Momentaufnahme, zu der sie gehören, der Verlauf der Kante des Profils ermittelt. Dieser Verlauf wird insbesondere bevorzugt als Grafik ausgegeben. In der einfachsten Ausführungsform werden die ermittelten Lagekoordinaten entsprechend Ihrer Aufnahmenreihenfolge aneinander gereiht und die daraus entstehende Grafik ausgegeben.

In einer bevorzugten Ausführungsform wird die Geradheitstoleranz qₓₓ und q_{yy} des Profils ermittelt, so wie sie in DIN EN 10 034 definiert ist. Hierzu wird mittels mathematischer Methoden die in DIN EN 10 034 im Anhang A noch als an das Profil anzulegende Schnur durch eine Gerade ersetzt und mittels geeigneter mathematischer Methoden der maximale Abstand zwischen dieser Gerade und der Kante des Profils ermittelt.

Aufgrund der Bewegung des Profils unter der Meßvorrichtung hindurch oder an der Meßvorrichtung vorbei besteht primär ein Interesse daran, eine einzige Lagekoordinate der Kante pro Momentaufnahme zu ermitteln, nämlich die Lagekoordinate in senkrechter Richtung zur Bewegungsrichtung des Profils. Zur Reduktion der Datenmenge werden deshalb als Meßvorrichtungen bevorzugt Linienkameras, also beispielsweise einzeilige Lichtschnittsensoren oder Temperatur-Linienkameras eingesetzt. Insbesondere bevorzugt wird als Momentaufnahme eine rechteckige, vorzugsweise ein linienartige Aufnahme erzeugt. Die Meßvorrichtung ist vorzugsweise derart auslegt, daß die längere Seite der Aufnahme, bzw. die Erstreckung der Linie senkrecht zur Bewegungsrichtung des Profils ausgerichtet ist, beispielsweise derart, daß die längere Seite der Aufnahme senkrecht zur Längsachse des Rollgangs ausgerichtet ist. In einer bevorzugten Ausführungsform wird die Momentaufnahme in einer Draufsicht von oben auf das Profil aufgenommen. Es hat sich gezeigt, daß hierdurch eine gut auszuwertende Momentaufnahme erzeugt werden kann, die von weiteren Umgebungseinflüssen relativ unbeeinträchtigt ist. Beispielsweise ist die Meßvorrichtung oberhalb des Rollgangs angeordnet und blickt von oben auf den Rollgang.

In einer bevorzugten Ausführungsform wird die Bewegungsgeschwindigkeit des Profils gemessen, also die Geschwindigkeit, mit der sich das Profil unter der Meßvorrichtung hindurch oder an der Meßvorrichtung vorbei bewegt. Aus dieser Geschwindigkeit kann beispielsweise die Länge des Profils ermittelt werden. Bei einigen der genormten Abweichungs-Kennzahlen, wie beispielsweise bei der Geradheitstoleranz qₓₓ und q_{yy}, werden die Abweichungs-Kennzahlen bei einer Auswertung auf die Länge des Profils bezogen. Die Länge kann nun aus der Geschwindigkeit und der Meßzeit bestimmt werden. Die Geschwindigkeit kann unmittelbar mit einem Laser-Geschwindigkeitsmeßgerät, aber auch über die Geschwindigkeit der Rollgangsrollen bestimmt werden, wenn das Profil zur Zeit der Messung bereits mit Rollgangsgeschwindigkeit bewegt wird. Je genauer die Messung der Größen, insbesondere der Geschwindigkeit, je genauer ist die Längenbestimmung des Profils und je genauer ist die ermittelte Geradheitsabweichung pro ermittelter Länge.

In einer bevorzugten Ausführungsform wird anstelle einer Momentaufnahme mit einer Kamera und der sich daran anschließenden Bildauswertung die Lagekoordinate des Profils mittels eines auf die Kante gerichteten Distanzsensors ermittelt. Der Distanzsensor ist dabei vorzugsweise derart ausgerichtet, daß er den Abstand des Profils zum Distanzsensor in eine Richtung mißt, die senkrecht zur Bewegungsrichtung des Profils steht. Die so ermittelte Distanz kann dann als Lagekoordinate in eine Richtung eines orthogonalen Koordinatensystems definiert werden und den vorgenannten Auswertungsschritten unterworfen werden.

Der erfindungsgemäße Grundgedanke schlägt sich auch in der Erkenntnis nieder, daß für ein gutes Richtergebnis eine präzise Einstellung der das Richten beeinflussenden Bauteile der Richtvorrichtung vorgenommen werden muß und schlägt vor, diese Einstellung auf Grundlage einer nach einer bestimmten Methode ermittelten Formabweichung vorzunehmen. Insbesondere werden die folgenden Parameter eingestellt: Vertikalanstellung der Richtachsen, Axialanstellung der Richtachsen, insbesondere zur Flanschstellungskorrektur.

Das erfindungsgemäße Meßverfahren zur Bestimmung des Verlaufs einer Kante eines Profils wird vorzugsweise verwendet, um die Kante eines parallel zu seiner Y-Y-Achse oder seiner X-X-Achse aufliegenden Profils zu ermitteln. Insbesondere bevorzugt wird das erfindungsgemäße Meßverfahren zur Bestimmung des Verlaufs einer Kante eines Metallprofils, insbesondere bevorzugt eines sogenannten I-Trägers, U-Trägers, T-Trägers, Z-Trägers oder L-Trägers verwendet. Außerdem kann das erfindungsgemäße Meßverfahren beispielsweise zur Bestimmung des Verlaufs einer Kante eines Halbzeugs verwendet werden, insbesondere bevorzugt bei schwerem Halbzeug wie Brammen und dergleichen. Gerade das schwere Halbzeug bietet den Vorteil, daß es - wie auch eine schweres Metallprofil - ruhig auf einem Rollgang liegt und dadurch Meßfehler durch Schwingungen im oder am Meßobjekt vermieden werden können.

Das erfindungsgemäße Richtverfahren sieht vor, daß das Metallprofil während der Ermittlung der Formabweichung über eine Metallprofil-Zufuhreinrichtung, vorzugsweise einen Rollgang, bewegt wird und die Formabweichung mittels einer Meßvorrichtung ermittelt wird, an der das Metallprofil vorbeibewegt wird, wobei die Meßvorrichtung vorzugsweise stationär angeordnet ist. Bei dem erfindungsgemäßen Richtverfahren ist das Metallprofil während der Ermittlung der Formabweichungsermittlung vorzugsweise ohne wesentliche profilverändernde Belastung von der Metallprofil-Zufuhreinrichtung gehalten, vorzugsweise mit Ausnahme seiner Auflage auf dem Rollgang nirgends festgelegt, so daß es seine Form unbeeinflußt von Formänderungen herbeiführende Festlegungen einnimmt. insbesondere ist das Metallprofil zum Zeitpunkt der Formabweichung weder zwischen Walzen einer Walzvorrichtung noch in einer ersten Festlegung der zum Richten verwendeten Richtvorrichtung festgelegt oder einem anderen Punkt entlang seiner Länge festgelegt. Als erste Festlegung der zum Richten verwendeten Richtvorrichtung werden insbesondere die formschlüssigen Treibrollen einer Richtanlage verstanden, deren Rollen auf das Profil gepreßt werden, oder sogenannte formschlüssige Stopp-Vorrichtungen, wie z.B. eine ausgefahrene Sperrvorrichtung im Rollgang, verstanden.

Die erfindungsgemäße Richtanlage für Metallprofile, die höchstens eine festgelegte Profillänge I aufweisen, weist eine Metallprofil-Zufuhreinrichtung, vorzugsweise einen Rollgang auf, über die die Metallprofile im wesentlichen in Richtung ihrer Längsachse bewegt werden können. Aus der Praxis ist bekannt, daß Metallprofile auch derart auf einem Rollgang zu liegen kommen, daß ihre Längsachse in einem Winkel zur Längsachse des Rollgangs steht. Schwere Profile bewegen sich dann in Richtung der Längsachse des Rollgangs unter Beibehaltung der Ausrichtung ihrer Längsachse, wobei auch diese Bewegung zum erfindungsgemäßen Richtverfahren zugehörig angesehen wird.

Die erfindungsgemäße Richtanlage weist ferner eine Meßvorrichtung für Formabweichungen des Metallprofils auf sowie eine Richtvorrichtung mit einer ersten Festlegung, in der das in die Richtvorrichtung einlaufende Metallprofil zum ersten Mal in der Richtvorrichtung festgelegt wird. Die Meßvorrichtung ist mindestens um die festgelegte Profillänge I von der ersten Festlegung entfernt angeordnet.

Alternativ kann eine erfindungsgemäße Richtanlage einen Aufbau aufweisen, bei der eine Metallprofil-Abfuhreinrichtung nach der Richtvorrichtung angeordnet ist und die Meßvorrichtung mindestens um die festgelegte Profillänge I von der letzten Festlegung der Richtvorrichtung entfernt angeordnet ist, so daß mittels der Meßvorrichtung die Formabweichung des aus der Richtanlage auslaufenden, freiliegenden Profils ermittelt werden kann.

In einer bevorzugten Ausführungsform ist zumindest eine der Rollen des vorzugsweise mehrere Rollen aufweisenden Rollgangs angetrieben. Dadurch kann das Metallprofil mit einer festgelegten Verfahrgeschwindigkeit über den Rollgang bewegt werden.

In einer bevorzugten Ausführungsform weist die Meßvorrichtung einen Lichtschnittsensor auf. Als Lichtschnittsensoren werden insbesondere bevorzugt optisch arbeitende Sensoren eingesetzt. Es wird senkrecht zur Längsrichtung eine Linie auf das Profil projiziert und der Verlauf dieser Linie registriert.

Alternativ oder ergänzend weist die Meßvorrichtung einen Abstandssensor auf. Der Abstandssensor ermittelt den Abstand eines Referenzpunkts auf dem Metallprofil zu einem Bezugspunkt. Besonders bevorzugt arbeitet der Abstandssensor optisch. Beispielsweise kann der Abstandssensor einen optischen Meßstrahl aussenden und die Reflektion des Meßstrahls aufnehmen und aus der Reflektion des Meßstrahls den Abstand des Punkts, an dem der optische Meßstrahl reflektiert wird, zum Aussendepunkt des optischen Meßstrahls ermitteln.

In einer bevorzugten Ausführungsform ist der Abstandssensor derart angeordnet, daß der Meßstrahl im wesentlichen horizontal und in einer Höhe h oberhalb des Rollgangs ausgesendet wird, wobei die Höhe h kleiner ist als die Dicke des Flansches des Profils. Eine derartige Richtanlage wird insbesondere bevorzugt bei Profilen eingesetzt, bei denen ein Flansch mit seiner großen Seitenfläche (Flanschaußenseite) auf dem Rollgang aufliegt. Wird der Meßstrahl in einer Höhe h ausgestrahlt, die kleiner ist als die kleinste Dicke des Flansches des Metallprofils mit dem dünnsten Flansch, so ist sichergestellt, daß der optische Meßstrahl stets auf die kleine Seitenfläche des Flansches (Flanschkantefläche) auftrifft und damit zuverlässige Meßresultate liefert. In der Praxis sind Probleme mit optischen Abstandsmessungen aufgetreten, wenn der optische Meßstrahl beispielsweise auf die Kante der Schmalseite des Flansches auftrifft. Hier wird der optische Meßstrahl stark gestreut, so daß die Reflektion zum einen nicht zuverlässig aufgenommen werden kann und zum anderen stark variiert, so daß auch die ermittelten Werte stark variieren und der wirkliche Abstand nicht zuverlässig bestimmt werden kann.

Zudem bietet diese Anordnung den Vorteil, daß der Abstandmesser beim Wechsel des zu richtenden Profils nicht an eine neue Profilhöhe oder dergleichen angepaßt werden muß. Da das Profil gemäß dieser bevorzugten Verwendung mit der Hauptseite seines Flansches (Flanschaußenseite) auf dem Rollgang aufliegt und der Abstandsmesser im bestimmten Verhältnis zu dem Rollgang angeordnet ist, wird stets dieser Flansch vermessen.

In einer bevorzugten Ausführungsform des erfindungsgemäßen Richtverfahrens, nimmt ein Lichtschnittsensor mindestens zwei Schnittbilder des Metallprofils in einer Entfernung von mindestens der Profillänge I von der ersten Festlegung auf. Besonders bevorzugt nimmt der Lichtschnittsensor eine Mehrzahl von Schnittbildern (Momentaufnahmen) des Metallprofils auf, so daß für jedes Schnittbild mittels einer Bildanalyse die Lage mindestens eines Referenzpunkts des Metallprofils (beispielsweise einer oder mehrerer Kanten) relativ zu einem Bezugspunkt (beispielsweise einem Koordinatensystem des Schnittbilds) ermittelt werden kann. Diese Bildanalyse kann Grundlage für die Ermittlung des Verlaufs der Abweichung der Lage des Referenzpunkts von einer Solllage bilden.

Diese Vorgehensweise erlaubt es, Abweichungs-Kennzahlen, wie beispielsweise die Geradheitstoleranz qₓₓ und q_{yy} zu ermitteln. Vorzugsweise wird auf Grundlage des ermittelten Verlaufs, sei er durch das Schnittbildverfahren und/oder durch den Einsatz des Abstandssensors ermittelt, der absolute Betrag und/oder der Ort der maximalen Abweichung der Lage des Referenzpunkts von einer Solllage in Bezug auf das Metallprofil ermittelt.

In der Praxis hat es sich gezeigt, daß gute Richtergebnisse bereits erzielt werden können, wenn die Richtvorrichtung auf die maximale Abweichung des Richtprofils eingestellt wird.

Die Ermittlung des Orts der jeweiligen Abweichung kann besonders gut erfolgen, wenn die Verfahrgeschwindigkeit des Metallprofils gemessen wird. Ist beispielsweise die Bildfrequenz des Lichtschnittsensors oder die Abtastfrequenz der Ermittlung der Reflektion des Meßstrahls bekannt, oder beispielsweise die Abtastrate der Bildanalyse, so kann mit der Information über die Verfahrgeschwindigkeit des Metallprofils der zugehörige Ort der für ein Schnittbild bzw. eine Abstandsmessung ermittelten Abweichung ermittelt werden.

In einer bevorzugten Ausführungsform wird das Metallprofil mit einer konstanten Geschwindigkeit über den Rollgang bewegt.

Die erfindungsgemäße Richtanlage und das erfindungsgemäße Richtverfahren werden insbesondere bevorzugt beim Richten von IPE-, HE- oder UPE- Trägem eingesetzt, die insbesondere bevorzugt auf einem Rollgang stehend, und zwar auf der Großfläche des Flansches (Flanschaußenseite) stehend der Richtvorrichtung zugeführt werden. Alternativ kann ein I-Träger beispielsweise auch auf die Flanschkantenfläche stehend der Richtvorrichtung zugeführt werden.

Nachfolgend wird die Erfindung anhand einer lediglich ein Ausführungsbeispiel darstellenden Zeichnung näher erläutert. Darin zeigt:

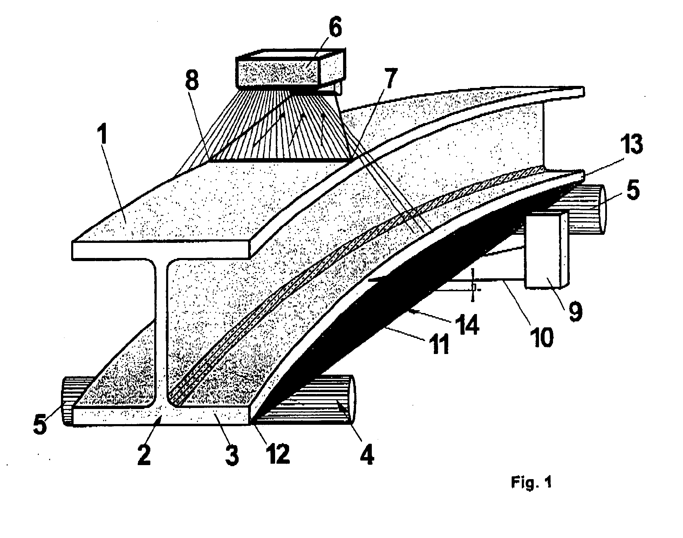

- Fig. 1: ein auf einem Rollgang mit der Großfläche des Flansches (Flanschaußenseite) aufliegendes I-Profil,
- Fig. 2: den Helligkeitsverlauf eines von einem Lichtschnittsensor aufgenommenen Bildes und
- Fig. 3: den Verlauf der Kantenlage X wie sie sich aus der Betrachtung der aus den Helligkeitsverläufen gemäß Fig. 2 für die jeweiligen Momentaufnahmen ermittelten Kantenlagen ergibt.

Das 1-Profil 1 liegt mit der Großfläche 2 seines unteren Flansches 3 auf einem Rollgang 4 auf, von dem zur Veranschaulichung lediglich einzelne Rollen 5 dargestellt sind. Das 1-Profil 1 liegt frei auf dem Rollgang 4 auf, ist also bis auf seine Auflage auf dem Rollgang an keiner anderen Stelle festgelegt.

Ein Lichtschnittsensor 6 ist oberhalb des Rollgangs 4 angeordnet und kann durch Bildanalyse des von ihm aufgenommenen Schnittbilds die Lage der als Referenzpunkte dienenden Kanten 7, 8 im Verhältnis zu einem Bezugspunkt ermitteln.

Ein optischer Abstandssensor 9 ist derart neben dem Rollgang 4 angeordnet, daß der von ihm ausgesandte Meßstrahl horizontal und in einer Höhe h oberhalb des Rollgangs ausgesendet wird, wobei die Höhe h kleiner ist, als die Dicke des Flansches 3.

In der Figur durch die Fläche 11 angedeutet ist ferner die Abweichung des 1-Profils 1 von einem Sollprofil. Aus den Messungen des Abstandssensors 9 wird zunächst die Lage eines Anfangspunkts 12 und eines Endpunkts 13 ermittelt, Diese Punkte werden dann mittels computerunterstützter Rechenmethoden durch eine Gerade 14 miteinander verbunden. Diese Gerade 14 stellt dann den Verlauf der Solllage dar, die die Seitenkante (Referenzpunkte) des Flansches 3 einnehmen sollte. Durch die Analyse der weiteren Messungen des Abstandssensors 9 wird nun der Abstand der Seitenfläche des Flansches 3 zu der Geraden 14 im jeweiligen Meßpunkt ermittelt und daraus der Verlauf der Abweichung der Lage der Referenzpunkte von der Solllage.

Dieser Verlauf der Abweichung der Lage der Referenzpunkte kann als Kennzahl für eine Gradheitstoleranz ausgedrückt werden oder zur Einstellung von Parametern einer dem Rollgang 4 nach- oder vorgeschalteten, nicht dargestellten Richtvorrichtung verwendet werden.

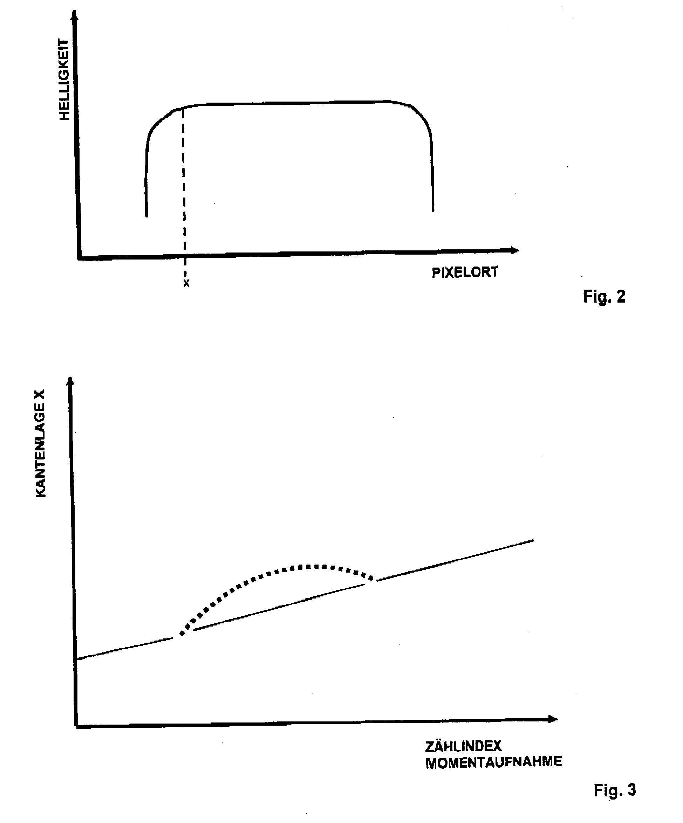

Fig. 2 zeigt den Helligkeitsverlauf eines Bildes eines Lichtschnittsensor (Einzeilenkamera), aufgetragen über den Pixelort. Zu erkennen ist, daß der Lichtschnittsensor das Profil gut dadurch abbildet, daß im Bereich des Profils das Bild einen höheren Helligkeitswert aufweist, als in Bereichen neben dem Profil. Aus einer Analyse des Helligkeitsverlaufs, beispielsweise aus einer Analyse des Verlaufs der ersten und/oder zweiten Ableitung dieses Verlaufs, kann die Kantenlage X ermittelt werden. Diese Kantenlage X ist die gesuchte Lagekoordinate, die zusammen mit einer Information über die jeweilige Momentaufnahme, zu der sie gehört, in einer Datenbank abgelegt wird. Abhängig von der Formabweichung des Profils und/oder der Lage des Profils auf dem Rollgang ergibt die Analyse des Helligkeitsverlaufs der nächsten Momentaufnahme die gleiche Lagekoordinate (Kantenlage X) bei einem geraden Profil, das gerade unter der Meßvorrichtung hindurchläuft, oder eine andere Lagekoordinate.

In Fig. 3 wird die Kantenlage X über den der jeweiligen Momentaufnahme zugehörigen Zählindex aufgetragen. Man erkennt, daß das untersuchte Profil sowohl schräg unter der Meßvorrichtung hindurchgelaufen ist (der Startpunkt und der Endpunkt weisen unterschiedliche Kantenlagen X auf), als auch eine Krümmung aufweist. Das Profil kann nun durch eine Rechenoperation "rechnerisch gedreht" werden, in dem die in Fig. 3 dargestellte Verlaufsgerade durch die Startkoordinate und die Endkoordinate gelegt wird und von den Lagekoordinaten der Momentaufnahmen der zugehörige Wert der Verlaufsgeraden abgezogen wird. Die jeweilige Lagekoordinate X wird zur modifizierten Lagekoordinate X'.

## Patentansprüche

1. Meßverfahren zur Bestimmung des Verlaufs einer Kante eines Profils (1) über die Länge des Profils, bei dem
- das Profil (1) an einer Meßvorrichtung vorbeibewegt wird,
- mit der Meßvorrichtung mehrere Momentaufnahmen eines Bereichs gemacht werden, in dem sich die zu beobachtende Kante (7, 8) befindet,
- mittels Auswertemethoden aus dem Helligkeitsverlauf über die Momentaufnahme zumindest eine Lagekoordinaten der Kante relativ zu einem festen Koordinatensystem der Momentaufnahme ermittelt wird,
- die Lagekoordinate unter Verknüpfung mit einer Information über die jeweilige Momentaufnahme, zu der sie gehört, in einer Datenbank abgelegt wird und
- aus den in der Datenbank abgelegten Lagekoordinaten unter Berücksichtigung der Information über die jeweilige Momentaufnahme, zu der sie gehören, der Verlauf der Kante (7, 8) des Profils (1) ermittelt wird.

2. Meßverfahren nach Anspruch 1, **dadurch gekennzeichnet, daß** die Momentaufnahme mit einem Lichtschnittsensor (6) oder einer Temperatur-Linienkamera erzeugt wird.

3. Meßverfahren nach Anspruch 2, **dadurch gekennzeichnet, daß** die Momentaufnahme mit einem einzeiligen Lichtschnittsensor (6) erzeugt wird.

4. Meßverfahren nach einem der Ansprüche 1 bis 3, **dadurch gekennzeichnet, daß** die Momentaufnahmen mit einer bestimmten Frequenz (f) aufgenommen werden.

5. Meßverfahren nach einem der Ansprüche 1 bis 4, **dadurch gekennzeichnet, daß** das Profil (1) auf einem Rollgang (4) liegend an der Meßvorrichtung vorbeibewegt wird.

6. Meßverfahren nach einem der Ansprüche 1 bis 5, **dadurch gekennzeichnet, daß** das Profil (1) während der gesamten Messung nur mit einer Profilseite aufliegt und ansonsten frei liegt, insbesondere weder an seinem vorderen Ende noch an seinem hinteren Ende festgelegt ist.

7. Meßverfahren nach einem der Ansprüche 1 bis 6, **dadurch gekennzeichnet, daß** die Momentaufnahme ein rechteckiges Bild erzeugt und daß die Meßvorrichtung derart ausgerichtet ist, daß die längere Seite des Bildes senkrecht zur Bewegungsrichtung der Profils (1) ausgerichtet ist.

8. Meßverfahren nach einem der Ansprüche 1 bis 7, **dadurch gekennzeichnet, daß** die Momentaufnahme in einer Draufsicht von oben auf das Profil (1) aufgenommen wird.

9. Meßverfahren nach einem der Ansprüche 1 bis 8, **dadurch gekennzeichnet, daß** die Bewegungsgeschwindigkeit des Profils (1) gemessen wird.

10. Meßverfahren nach einem der Ansprüche 1 bis 9, **dadurch gekennzeichnet, daß** anstelle der Aufnahme mehrerer Momentaufnahmen eines Bereichs, in dem sich die zu beobachtende Kante (7, 8) befindet, und der Ermittlung der Lagekoordinate der Kante relativ zu einem festen Koordinatensystem des Bildes mittels Bildauswertemethoden aus dem Helligkeitsverlauf des Bildes die Lage der Kante mittels einer Momentaufnahme eines auf die Kante gerichteten Distanzsensors ermittelt und die ermittelte Distanz als Lagekoordinate in eine Richtung eines orthogonalen Koordinatensystems definiert wird.

11. Verwendung des Meßverfahrens nach einem der Ansprüche 1 bis 10 zur Bestimmung des Verlaufs einer Kante eines Metallprofils.

12. Verwendung des Meßverfahrens nach einem der Ansprüche 1 bis 10 zur Bestimmung des Verlaufs einer Kante eines Halbzeugs.

13. Richtanlage für Metallprofile, die eine Profillänge von weniger als der Länge aufweisen, mit
- einer Metallprofil-Zufuhreinrichtung, mit der die Metallprofile einer Richtvorrichtung zugeführt werden können,
- einer Meßvorrichtung für Formabweichungen des Metallprofils und
- einer Richtvorrichtung mit einer ersten Festlegung, in der das in die Richtvorrichtung einlaufende Metallprofil zum ersten Mal in der Richtvorrichtung festgelegt wird,
bei der die Meßvorrichtung mindestens um die festgelegte Profillänge I von der ersten Festlegung entfernt angeordnet ist.

14. Richtanlage für Metallprofile, die eine Profillänge von weniger als der Länge I aufweisen, mit
- einer Metallprofil-Abfuhreinrichtung, mit der die Metallprofile von einer Richtvorrichtung abgeführt werden können,
- einer Meßvorrichtung für Formabweichungen des Metallprofils und
- einer Richtvorrichtung mit einer letzten Festlegung, in der das aus der Richtvorrichtung auslaufende Metallprofil zum letzten Mal in der Richtvorrichtung festgelegt wird,
bei der die Meßvorrichtung mindestens um die festgelegte Profillänge I von der letzten Festlegung entfernt angeordnet ist.

15. Richtanlage nach Anspruch 13 oder 14, **dadurch gekennzeichnet, daß** der Richtanlage ein Rollgang (4) vor- bzw. nachgeschaltet ist.

16. Richtanlage nach einem der Ansprüche 13 bis 15, **dadurch gekennzeichnet, daß** die Meßvorrichtung einen Lichtschnittsensor (6) aufweist.

17. Richtanlage nach einem der Ansprüche 13 bis 16, **dadurch gekennzeichnet, daß** die Meßvorrichtung einen Abstandsmesser (9) aufweist.

18. Richtanlage nach Anspruch 17, **dadurch gekennzeichnet, daß** der Abstandsmesser (9) einen optischen Meßstrahl aussendet und aus der Reflektion des Meßstrahls den Abstand ermittelt und daß der Abstandsmesser derart angeordnet ist, daß der Meßstrahl im wesentlichen horizontal und in einer Höhe h oberhalb des Rollgangs (4) ausgesendet wird, wobei die Höhe h kleiner ist, als die Dicke des Flansches (3),

19. Richtverfahren für Metallprofile mit einer Profillänge von weniger als der Länge I, bei dem
- das Metallprofil über eine Metallprofil-Zufuhreinrichtung auf eine Richtvorrichtung zu bewegt wird
- die Formabweichung des Metallprofils mittels einer Meßvorrichtung in einer Entfernung von mindestens der Profillänge 1 von einer ersten Festlegung der zum Richten verwendeten Richtvorrichtung, in der das in die Richtvorrichtung einlaufende Metallprofil zum ersten Mal in der Richtvorrichtung festgelegt wird, ermittelt wird und
- die Einstellung der das Richten beeinflussenden Bauteile der Richtvorrichtung auf Grundlage der ermittelten Formabweichung erfolgt.

20. Richtverfahren für Metallprofile mit einer Profillänge von weniger als der Länge I, bei dem
- das Metallprofil über eine Metallprofil-Abfuhreinrichtung von einer Richtvorrichtung fortbewegt wird
- die Formabweichung des Metallprofils mittels einer Meßvorrichtung in einer Entfernung von mindestens der Profillänge I von einer letzten Festlegung der zum Richten verwendeten Richtvorrichtung, in der das aus der Richtvorrichtung auslaufende Metallprofil zum letzten Mal in der Richtvorrichtung festgelegt wird, ermittelt wird und
- die Einstellung der das Richten beeinflussenden Bauteile der Richtvorrichtung auf Grundlage der ermittelten Formabweichung erfolgt.

21. Richtverfahren nach Anspruch 19 oder 20, **dadurch gekennzeichnet, daß** ein in einer Entfernung von mindestens der Profillänge I von der ersten Festlegung angeordneter Lichtschnittsensor mindestens ein Schnittbild des Metallprofils aufnimmt.

22. **Richtverfahren nach Anspruch 21, dadurch gekennzeichnet, daß**
- der Lichtschnittsensor eine Mehrzahl von Schnittbildern des Metallprofils aufnimmt,
- für jedes Schnittbild mittels einer Bildanalyse die Lage mindestens eines Referenzpunkts des Metallprofils relativ zu einem Bezugspunkt ermittelt wird und
- auf Grundlage der Bildanalyse der Verlauf der Abweichung der Lage der Referenzpunkts von einer Solllage ermittelt wird.

23. Richtverfahren nach einem der Ansprüche 19 bis 22, **dadurch gekennzeichnet, daß** ein in einer Entfernung von mindestens der Profillänge I von der ersten Festlegung angeordneter Abstandssensor mindestens an einer Stelle des an dem Abstandssensor vorbeibewegten Metallprofils den Abstand eines Referenzpunkts auf dem Metallprofil zu einem Bezugspunkt aufnimmt.

24. Richtverfahren nach Anspruch 23, **dadurch gekennzeichnet, daß**
- eine Mehrzahl von Abstandsmessungen vorgenommen wird und
- auf Grundlage der gemessenen Abstände der Verlauf der Abweichung der Lage des Referenzpunkts von einer Solllage ermittelt wird.

25. Richtverfahren nach Anspruch 22 oder 24, **dadurch gekennzeichnet, daß** auf Grundlage des Verlaufs der Abweichung der absolute Betrag und/oder der Ort der maximalen Abweichung der Lage des Referenzpunkts von einer Solllage im Bezug auf das Metallprofil ermittelt wird.

26. Richtverfahren nach einem der Ansprüche 19 bis 25, **dadurch gekennzeichnet, daß** die Verfahrgeschwindigkeit des Metallprofils kontinuierlich gemessen wird.

27. Richtverfahren nach einem der Ansprüche 19 bis 26, **dadurch gekennzeichnet, daß** das Metallprofil mit konstanter Geschwindigkeit über den Rollgang bewegt wird.
